# FASCICULE DE BREVET EUROPEEN

(11) **EP 2 710 351 B1**
(45) Date de publication et mention de la délivrance du brevet: **16.12.2020**
(21) Numéro de dépôt: 11815551.4
(22) Date de dépôt: 28.12.2011
(51) Int. Cl.: G01N 21/64

(54) **DISPOSITIF DE TYPE BIOPUCE**
BIOCHIP-VORRICHTUNG
BIOCHIP DEVICE

(30) Priorité: 29.12.2010 FR 1061349
(43) Date de publication de la demande: 26.03.2014
(73) Titulaire: Genewave, 75011 Paris (FR)
(72) Inventeur: WEISBUCH, Claude, F-75013 Paris (FR); MARTINELLI, Lucio, F-75002 Paris (FR); BENISTY, Henri, F-91120 Palaiseau (FR); SCHAFAUER, Christof, F-75019 Paris (FR); SAGARZAZU, Gabriel, F- 64500 Ciboure (FR); GACOIN, Thierry, F-91440 Bures Sur Yvette (FR); BEDU, Mélanie, F-31000 Toulouse (FR)
(74) Mandataire: Jacobacci Coralis Harle
(86) Numéro de dépôt international: PCT/FR2011/053208
(87) Numéro de publication internationale: WO 2012/089987

(56) Documents cités:
- DE-A1- 19 611 025
- FR-A1- 2 832 506
- FR-A1- 2 846 745
- FR-A1- 2 892 196
- FR-A1- 2 932 885
- US-A1- 2001 003 043
- US-B1- 6 620 623
- SAGARZAZU G ET AL: "Quantitative analysis of enhanced light irradiance in waveguide-based fluorescent microarrays", BIOSENSORS AND BIOELECTRONICS, vol. 24, no. 7, 15 mars 2009 (2009-03-15), pages 2281-2284, XP025959015, ELSEVIER BV, NL ISSN: 0956-5663, DOI: 10.1016/J.BIOS.2008.11.001 [extrait le 2009-02-23]
- SCHMITT K ET AL: "Optical Guided-wave Chemical and Biosensors I, High-Refractive-Index Waveguide Platforms for Chemical and Biosensing", 1 janvier 2010 (2010-01-01), OPTICAL GUIDED-WAVE CHEMICAL AND BIOSENSORS I; [SPRINGER SERIES ON CHEMICAL SENSORS AND BIOSENSORS ; 7], SPRINGER, HEIDELBERG [U.A.], PAGE(S) 21 - 54, XP002655410, ISBN: 978-3-540-88241-1 alinéa [0006] - alinéa [0009]; figures 1-3,8,15
- Mélanie Bedu: "Développement de guides d'ondes planaires de TiO2 optiquement actifs pour biopuces à ondes évanescentes", THESE DE DOCTORAT , 1 mars 2010 (2010-03-01), page 200PP, XP002675840, Ecole Normale Superieure de Cachan, France Extrait de l'Internet: URL:http://tel.archives-ouvertes.fr/docs/0 0/46/23/82/PDF/Soutenance_Melanie_Bedu.pdf [extrait le 2012-05-15]

## Description

L'invention concerne un dispositif de type biopuce destiné à l'analyse de molécules biologiques par marquage fluorescent.

Dans ces dispositifs, un substrat comporte des plots constitués de molécules sondes capables de s'hybrider de manière préférentielle avec des molécules cibles contenues dans une solution d'hybridation obtenue à partir d'un échantillon à analyser. Les molécules cibles sont marquées à l'aide d'éléments chromophores capables d'émettre une fluorescence dont la longueur d'onde dépend de leur nature, quand ils sont excités par une lumière appropriée.

Après hybridation, la biopuce est séchée et éclairée avec une source lumineuse à la longueur d'onde d'excitation des chromophores marquant les molécules cibles et l'on recueille une image de la fluorescence de la biopuce à l'aide d'une optique adaptée. Dans l'image ainsi obtenue, l'intensité de chaque point est reliée à la quantité de chromophores présents au point correspondant de la biopuce, et donc au nombre de molécules cibles qui se sont fixées sélectivement en ce point lors de la phase d'hybridation, ce qui permet d'obtenir des informations sur le contenu en espèces biologiques de la solution hybridée.

Ce type de lecture séquentielle de la fluorescence de la biopuce après hybridation est toutefois inadapté pour effectuer une lecture en temps réel du signal d'hybridation puisque les phases d'hybridation et d'imagerie sont temporellement dissociées, et s'effectuent dans des appareils d'hybridation et de lecture séparés.

Certains appareils intègrent les phases d'hybridation et de lecture et permettent ainsi de détecter le signal en temps réel, durant la phase d'hybridation (voir notamment Y. Marcy, P.-Y. Cousin, M. Rattier, G. Cerovic, G. Escalier, G. Béna, M. Guéron, L. McDonagh, F.L. Boulaire, H. Benisty, C. Weisbuch, J.-C. Avarre, «Innovative integrated system for real-time measurement of hybridization and melting on standard format microarrays», Biotechniques 44, 2008, 913). L'image de la fluorescence des plots portant des molécules hybridées est acquise en présence du liquide d'hybridation contenant les molécules cibles marquées, donc fluorescentes, qui peuvent être présentes en grande concentration. On observe alors de la fluorescence provenant à la fois des molécules cibles accrochées aux plots de molécules sondes (formant le signal utile) et des molécules fluorescentes dans la solution (constituant un signal de fond qui s'ajoute au signal utile).

Cela est désavantageux, car le fort signal de fond généré par les espèces fluorescentes en solution limite la sensibilité de la détection de l'accrochage des molécules cibles et la dynamique de la mesure d'hybridation.

Pour éviter cet inconvénient, une possibilité consiste à exciter sélectivement les molécules à la surface de la biopuce sans exciter celles présentes dans la solution, en utilisant une onde évanescente à la surface de la biopuce de manière à exciter seulement les plots fluorescents (une technique souvent utilisée pour cela est la configuration de type 'TIRF' : Total Internal Reflection Fluorescence). D'autres méthodes d'excitation d'ondes évanescentes consistent par exemple à utiliser des substrats portant un guide d'onde, de préférence monomode, et à exciter un ou plusieurs modes dans ce guide d'onde à l'aide de réseaux de couplage gravés ou à exciter des modes guidés dans la biopuce par éclairage de la tranche (U82004077099A1).

On trouvera dans l'article de Schmitt et al., « Optical Guided-wave Chemical and Biosensors I, High- Refractive-Index Waveguide Platforms for Chemical and Biosensing », 1 janvier 2010 (2010-01-01), OPTICAL GUIDED-WAVE CHEMICAL AND BIOSENSORS I, pp. 21-54, une description des différents moyens de couplage d'une excitation extérieure avec une structure optique guidante et de la nécessaire précision des structures de couplage, de directionnalité et de collimation de la lumière excitatrice.

Le document US 6620623 enseigne un système d'éclairage où la lumière entrante dans le substrat d'une biopuce est transmise à travers la tranche de la biopuce à partir d'un faisceau planaire de fibres optiques, ce qui nécessite l'alignement du réseau de fibres optiques avec la tranche du substrat. La lumière sortant des fibres est diffusée par un collimateur divergent vers la tranche du substrat pour avoir une excitation homogène et la lumière excitatrice se propageant dans le plan du substrat du microarray.

Le document US 2001/003043 enseigne l'excitation d'un substrat de biopuce à l'aide d'un faisceau collimaté excitant à travers la tranche du substrat les modes guidés dans le substrat, ou le couplage aux modes guidés du substrat par une face à l'aide d'un prisme ou d'un réseau de diffraction.

Le document FR 2846745 et la thèse de Mélanie Bedu («Développement de Guides d'ondes Planaires de TiO2 Optiquement Actifs Pour Biopuces à Ondes Évanescentes», Thèse de Doctorat de l'École Normale Supérieure de Cachan, 13 Novembre 2009) enseignent l'excitation de modes guidés d'un guide d'ondes monomode ou multimode qui contient des éléments photoluminescents émettant à des longueurs d'ondes capables d'exciter les éléments chromophores de la biopuce. La lumière excitatrice est donc convertie à la fois en longueurs d'ondes et en directions par le phénomène de photoluminescence qui est, pour simplifier l'argument, isotrope. Cette photoluminescence excite alors des modes guidés dans le guide d'ondes. L'excitation de la photoluminescence peut se faire avec un faisceau incident sur les espèces photoluminescentes sans être précisément collimaté, un avantage certain par rapport aux techniques discutées ci-dessus. Par contre, la méthode comporte deux inconvénients : la fabrication de guides d'ondes contenant des espèces photoluminescentes est coûteuse et la méthode manque de flexibilité : les espèces photoluminescentes et les chromophores sont appariés, ainsi que la lumière d'excitation, ce qui impose, par exemple, qu'une fois les guides d'ondes fabriqués avec leurs espèces fluorescentes, les chromophores utilisés dans la biopuces ont leur longueur d'onde d'excitation quasi-imposée. Cela aussi fige la longueur d'onde d'excitation. Enfin, la puissance d'excitation de chromophores va être limitée par le puissance supportée par les espèces photoluminescentes avant leur blanchiment (*«bleaching»*).

De façon générale, il est également nécessaire de prendre en considération l'interaction des ondes guidées avec la partie optofluidique du dispositif en contact avec le guide d'onde.

Pour les dispositifs à ondes évanescentes décrits ci-dessus, le couplage de la lumière nécessite d'utiliser des dispositifs d'excitation ayant des contraintes mécaniques très exigeantes en termes de précision.

Ce type de couplage impose soit l'utilisation d'optiques de précision submicronique sur des tranches polies pour le couplage de la lumière d'excitation à un seul mode, soit le recours à des faisceaux collimatés sous des angles très précis (quelques milliradians ou moins).

La présente invention s'affranchit des contraintes décrites ci-dessus. Il est connu qu'une lumière incidente sur des ensembles inhomogènes tels des particules métalliques ou diélectriques, ou généralement des diffuseurs, permet d'exciter des modes guidés d'une structure planaire quelconque à condition que les éléments du diffuseur soient en position très proche du guide, dans la queue évanescente des modes. Cela permet ainsi de s'affranchir des faibles tolérances de couplage rencontrées avec les dispositifs précédemment décrits. On appellera de tels diffuseurs des « *moyens de génération ou de couplage sensiblement non directifs »* de modes guidés.

L'expression « moyens de couplage sensiblement non directifs » désigne ici des moyens de couplage d'une lumière d'excitation dans le guide d'onde sous forme d'ondes guidées dans une pluralité de directions à l'intérieur du guide d'onde, à partir d'une lumière d'excitation provenant d'une pluralité de directions. Le couplage de la lumière d'excitation avec le guide d'onde peut se faire à partir d'un faisceau de lumière d'excitation non nécessairement collimaté. Avec de tels moyens de couplage, il n'est plus nécessaire d'orienter très précisément le faisceau sur le guide d'onde.

De tels moyens de couplage sont connus pour des guides d'ondes et cellules solaires, en silicium par exemple. Dans ces applications, une interface désordonnée diffusante sert à transformer la lumière incidente en lumière guidée afin qu'elle soit utilisée dans le guide d'onde ou absorbée dans la cellule solaire. Pour les applications en guides d'ondes, l'objectif est ensuite d'utiliser la lumière dans le guide pour qu'elle y soit absorbée pour une utilisation par exemple dans un dispositif photodétecteur. Pour les cellules solaires, la diffusion a lieu sur toute la surface de la cellule afin de bien capturer toute la lumière interceptée par la cellule.

L'invention a pour but d'apporter une solution simple aux problèmes précités des dispositifs de type biopuce connus de la technique antérieure.

A cette fin, l'invention propose un dispositif de type biopuce, tel que défini dans la revendication 1.

L'intégration de moyens de couplage sensiblement non directifs à un dispositif de type biopuce permet de s'affranchir des contraintes de précision rencontrées avec la technique connue.

Selon l'invention, les moyens de couplage ne couvrent qu'une partie de la biopuce. En particulier, ces moyens de couplage sont placés à distance de la partie fluidique ou optofluidique, pour éviter une extraction des ondes guidées vers le fluide contenant des molécules fluorescente, ce qui est précisément ce que l'on cherche à éviter grâce à l'excitation des fluorophores excités par les seules ondes évanescentes.

Dans une configuration avantageuse, le dispositif comprend des moyens de filtrage modal pour la suppression dans le guide d'onde des modes guidés d'indice effectif inférieur ou égal à une valeur seuil prédéterminée, cette valeur seuil étant choisie de manière à ce qu'aucun mode guidé ne s'échappe du guide après la zone comportant les moyens de filtrage.

Un premier inconvénient des approches à base de moyens de couplage sensiblement non directifs réside dans la faible efficacité de couplage des modes excitateurs à des modes guidés. Pour atteindre une intensité guidée donnée, il est possible d'utiliser une source excitatrice plus intense. Toutefois, le principal inconvénient dans le cas d'un guide multimode est que ce type de méthode d'excitation des modes guidés tend à exciter les modes quel que soit leur indice effectif. Or les modes d'indices effectifs les plus faibles correspondent à des modes qui sortent du guide pour aller dans le fluide ou dans les parties optofluidiques, où ils contribuent à l'augmentation du signal de fond.

Du fait que les modes guidés ne transfèrent un flux propagatif dans le fluide qu'au contact du fluide ou de la partie optofluidique, l'utilisation de moyens de couplage non directifs peut avantageusement être combinée avec des moyens de filtrage supprimant les modes gênants capables d'interagir avec le fluide ou la partie optofluidique.

D'un point de vue théorique, la condition de non-transfert d'un mode guidé à une interface est habituellement présentée sous forme angulaire (l'angle d'incidence sur l'interface est supérieur à un angle critique) mais cette condition se décline plus fondamentalement sous forme d'indice effectif du mode guidé lequel doit être plus grand que celui de la partie optofluidique ou du fluide.

En synthétisant les propositions ci-dessus, dans le dispositif selon l'invention, la facilité mécanique du couplage est assurée par des moyens de génération d'ondes guidées faiblement directifs tels que notamment des milieux diffuseurs optiques, tandis que les moyens de filtrage modal permettent une suppression sélective de ceux parmi les modes guidés qui pourraient être extraits du guide d'onde et augmenter le signal parasite de fond. Ainsi, les modes guidés dont l'indice effectif est inférieur à celui du matériau d'une chambre d'hybridation et à celui de la solution biologique sont filtrés avant d'arriver au niveau de la zone optofluidique et a fortiori avant d'arriver au niveau de la zone portant les éléments chromophores de sorte que l'on évite une excitation des éléments chromophores libres en solution au-delà de l'onde évanescente.

Dans un premier mode de réalisation, les moyens de filtrage comprennent une couche d'adaptation d'indice en contact avec le guide d'onde et formée d'un milieu d'indice sensiblement égal à la valeur seuil prédéterminée de manière à filtrer par extraction les modes guidés d'indice effectif inférieur à la valeur seuil, pour qu'ils n'atteignent pas les zones comportant des fonctions fluidiques ou optofluidiques. La couche d'adaptation d'indice détermine la valeur seuil précitée en dessous de laquelle tous les modes jusque-là guidés seront extraits du guide d'onde.

Selon une variante, la couche d'adaptation d'indice est intercalée entre la lame guide d'onde et une couche inférieure d'absorption, la couche d'adaptation d'indice et la couche d'absorption s'étendant sur toute la longueur du guide d'onde, la couche d'absorption ayant un indice au moins égal à celui de la couche intermédiaire d'adaptation d'indice et présentant une absorption importante à l'échelle du trajet optique entre les moyens de couplage et une zone du guide d'onde portant les éléments chromophores, aux longueurs d'onde d'excitation des chromophores.

En pratique, la couche d'absorption a un coefficient d'absorption supérieur ou égal à 2/L, où L correspond à la distance entre les moyens de couplage non directifs et la partie optofluidique de façon à garantir une absorption suffisante des modes d'indice inférieur à la valeur seuil prédéterminée. Ces modes sont amenés à se propager dans cette couche et ont après un trajet d'environ L, une transmission inférieure à exp(-2) approximativement égale à 0,14. La lame guide d'onde et la couche d'adaptation d'indice permettent, avec des épaisseurs connues de l'homme du métier d'avoir au moins un mode guidé sur au moins une longueur L avec un indice n_{eff} plus grand que le seuil souhaité.

Selon une autre variante de ce premier mode de réalisation, les moyens de filtrage sont portés par le guide d'onde et sont localisés, entre une zone du guide d'onde dans laquelle sont générées les ondes guidées et une zone du guide d'onde portant les éléments chromophores.

Avantageusement, des moyens d'absorption ou de déviation des modes guidés extraits du guide d'onde sont montés sur la couche d'adaptation d'indice, afin que les modes extraits ne puissent pas parvenir jusqu'aux parties fluidiques ou optofluidiques de la biopuce.

Les moyens d'absorption consistent par exemple en un filtre à large bande. Les moyens de déviation peuvent consister en un prisme ou un réseau, ces moyens étant directement accolés à la couche d'adaptation d'indice.

Selon une autre caractéristique de l'invention, la couche d'adaptation d'indice ainsi que les moyens d'absorption ou les moyens de déviation s'étendent le long du guide d'onde sur une distance supérieure à la longueur permettant que le mode guidé à filtrer ayant le plus haut indice effectif interagisse au moins une fois avec l'interface filtrant les modes.

Cette distance est donnée par 2×e×tan θ, où e est l'épaisseur du guide d'onde et θ est l'angle de réflexion à l'intérieur du guide d'onde et par rapport à la normale au guide d'onde. Avec une telle étendue minimum des moyens de filtrage, on garantit que tous les modes guidés, dont l'indice effectif est inférieur à la valeur seuil prédéterminée, subiront au moins une réfraction, ou une absorption, ou une déviation au niveau de l'interface du guide d'onde et seront ainsi extraits du guide d'onde.

Selon une autre caractéristique de l'invention, les moyens de filtrage modal s'étendent en amont et à l'extérieur de la zone portant les éléments chromophores mais aussi en partie dans cette zone. Cela a pour intérêt de filtrer les photons éventuellement diffusés par les bords de la chambre d'hybridation vers des modes guidés du guide d'indice incontrôlés qui pourraient ensuite quitter le guide d'ondes et exciter la solution d'hybridation.

Préférentiellement, la valeur seuil est choisie pour être supérieure ou égale au plus haut indice de réfraction des éléments constituants l'environnement des chromophores, tels par exemple qu'une chambre d'hybridation placée sur le substrat, généralement en contact optique, et un fluide d'hybridation contenu dans la chambre, ce qui évite que les modes guidés d'indice effectif inférieur à la valeur seuil ne soient extraits du guide d'onde et ne se propagent directement dans le fluide d'hybridation, ou bien indirectement dans le fluide par l'intermédiaire du matériau de la chambre d'hybridation, et n'excitent les chromophores des molécules cibles non accrochées à des molécules sondes.

En pratique, la valeur seuil est comprise entre n=1,30 et n=1,45 puisque l'indice de réfraction d'une solution d'hybridation est habituellement compris entre n=1,3 et n=1,4 et que le matériau constituant la chambre est habituellement du PDMS (polydiméthylsiloxane) est de n=1,42.

Dans un second mode de réalisation, les moyens de filtrage sont formés par la lame portant les éléments chromophores et dont les faces supérieure et inférieure s'écartent l'une de l'autre depuis la zone des moyens de couplage jusqu'en aval de la zone portant les éléments chromophores, de façon à élever à l'occasion de chaque réflexion interne le plus bas indice effectif de la distribution de lumière. Cela correspond ainsi à rendre les rayons des ondes guidées plus obliques à leur arrivée dans la zone optofluidique que l'angle limite associé au passage dans le fluide ou dans le matériau de la chambre d'hybridation.

Dans ce second mode de réalisation, la structure n'est donc plus planaire mais évasée, avec un angle α défini entre les faces supérieure et inférieure de la lame précitée. Ainsi, l'angle d'un mode guidé augmente donc de 2α à chaque rebond du mode guidé sur la face inférieure. L'application des lois de l'optique géométrique aux images successives issues d'un point sur la surface supérieure montre aisément que le plus petit angle (auquel correspond le plus bas indice effectif) croît jusqu'à la limite de 90° quand la source de génération d'ondes guidées se rapproche de l'arête formée par l'intersection des faces supérieure et inférieure du guide. Il existe donc une position idéale L' entre cette arête, et le système optofluidique, pour placer les moyens de couplage sensiblement non directifs.

Dans une réalisation particulière de ce second mode de réalisation, les faces supérieure et inférieure du guide d'onde sont planes et les moyens de couplage non directifs sont placés au quart de la distance séparant l'arête formée à l'intersection des faces supérieure et inférieure et la partie du guide d'onde portant les éléments chromophores.

Dans une variante possible, seule la face supérieure peut être plane, la face inférieure étant par exemple incurvée concave.

Préférentiellement, le couplage de la lumière d'excitation se fait par diffusion et génère des ondes guidées se propageant dans une pluralité de directions à l'intérieur du guide d'onde.

Les ondes guidées peuvent être générées par éclairage d'une structure diffusante formée dans ou sur le guide d'onde, ce qui permet la formation d'ondes guidées se propageant dans une pluralité de directions à l'intérieur du guide d'onde, et évite une étape ultérieure d'homogénéisation de la lumière guidée dans le plan du guide.

Avantageusement, la structure diffusante servant à réaliser un couplage sensiblement non directif est une structure à répartition spatiale désordonnée d'indice.

La structure diffusante peut être formée par un dépoli ayant une granularité typique tant dans le plan du guide que perpendiculairement comprise entre 0,1 µm et 50 µm. La structure diffusante peut également être formée par une couche déposée sur une face du guide d'onde, par exemple de téflon ou de particules métalliques ou colloïdales.

En variante, la structure diffusante peut comprendre des particules diffusantes dans une matrice d'une résine telle par exemple qu'une résine acrylique, glycérophtalique ou d'un polymère qui peut être fluoré. Afin de garantir une bonne diffusion de la lumière d'excitation par la structure diffusante, il est préférable que la matrice ait un indice de réfraction inférieur d'au moins Δn=0,5 à celui des particules diffusantes. Des particules de haut indice sont ainsi préférables, par exemple des oxydes comme TiO₂, Ta₂O₅, BaSO₄.

La structure diffusante peut aussi être située à l'intérieur du guide d'onde et être réalisée sous la forme de micro-cavités de dimensions de l'ordre de 0,1 à 40 µm et préférentiellement de l'ordre de 0,1 à 30 µm. Elle peut aussi être réalisée sous la forme de modifications locales telles que la formation locale de composés non stœchiométriques du type SiOₓ dans du verre par exemple ou bien sous la forme de zones moléculaires de phases différentes de la phase du guide, par exemple ordonnée au lieu d'amorphe notamment. Ces changements de stœchiométrie ou de phases affectent l'indice ou le tenseur diélectrique de la structure diffusante. Une telle structure diffusante peut être réalisée par apport d'énergie localisé par un laser focalisé à l'endroit où l'on souhaite former la structure diffusante.

Dans une seconde réalisation de la structure diffusante, celle-ci est déposée sur une face du guide d'onde et comprend une couche de matériau fluorophore et générant en réponse à une excitation lumineuse une lumière de fluorescence se propageant à son tour dans le guide d'onde sous forme d'ondes ayant une partie évanescente.

Les matériaux fluorophores peuvent être de natures très diverses et comprennent notamment des boites quantiques, des fluorophores organiques ou à base de terre rare ou d'ions luminescents.

D'autres avantages et caractéristiques de l'invention apparaîtront à la lecture de la description suivante faite à titre d'exemple non limitatif et en référence aux dessins annexés dans lesquels :
- la figure 1 est une vue schématique en coupe d'un dispositif de type biopuce de la technique connue ;
- les figures 2 et 3 sont des vues schématiques en coupe d'un dispositif de type biopuce selon l'invention comprenant des moyens de filtrage intégrés au guide d'onde ;
- la figure 4 est une vue schématique en coupe d'un dispositif de type biopuce selon l'invention dans lequel le guide d'onde porte les moyens de filtrage ;
- les figures 5 et 6 sont des vues schématiques en coupe de deux variantes du dispositif de la figure 4;
- les figures 7A, 7B et 7C sont des représentations schématiques de la partie du guide d'onde au niveau de laquelle sont formées les ondes guidées ayant une partie évanescente ;
- les figures 8 à 13 représentent différents montages permettant de générer des ondes guidées dans le guide d'onde avec le dispositif selon l'invention.

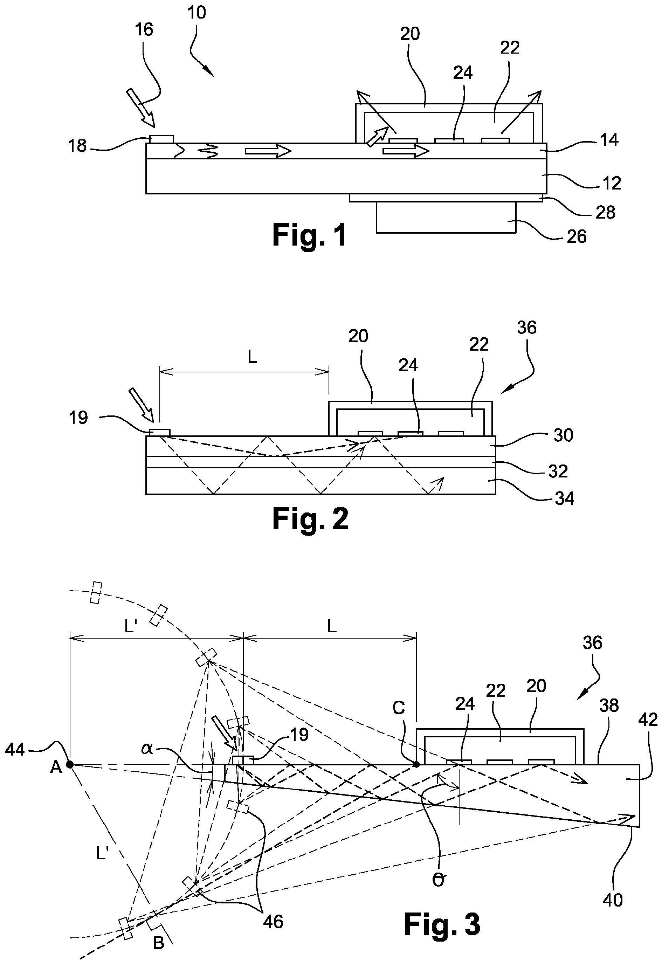

On se réfère tout d'abord à la figure 1 qui représente un dispositif 10 de type biopuce de la technique connue comprenant un substrat 12 comportant une couche supérieure 14 formant un guide d'onde. Une lumière d'excitation 16 est dirigée sur des moyens de couplage 18 tels que par exemple un réseau formé à la surface du guide d'onde de manière à faire se propager une onde guidée à l'intérieur du guide d'onde 14. Le guide d'onde 14 porte, à distance du réseau 18, une chambre d'hybridation 20 contenant une solution 22 comportant des molécules cibles marquées par des éléments chromophores et aptes à venir d'hybrider avec des molécules sondes déposées sur des plots 24 de la surface du guide d'onde 14.

Des moyens de détection sont prévus par exemple sur la face du substrat 12 opposée à celle portant la chambre d'hybridation 20 et comprennent une caméra 26 telle qu'une caméra CCD ou CMOS et un filtre 28 de réjection de la lumière d'excitation des chromophores. Dans un tel dispositif, la partie évanescente de l'onde guidée excite les chromophores portés par le guide d'onde 14. Toutefois, et comme évoqué précédemment, ce type de dispositif peut s'avérer difficile à mettre en oeuvre du fait de la difficulté à réaliser un couplage optique adéquat entre la lumière incidente et le guide d'onde, ce couplage nécessitant une grande précision sur l'angle d'incidence de collimation de la lumière d'excitation s'il s'agit d'un couplage par réseau résonnant classique en optique guidée, ou bien une précision mécanique submicronique s'il s'agit d'un couplage direct par la tranche. De plus, et surtout lorsque le guide d'onde est apte à faire se propager une pluralité de modes guidés, c'est-à-dire un guide d'onde ayant typiquement une épaisseur supérieure à la longueur d'onde des ondes guidées pour des sauts d'indice de l'ordre de 1, les modes guidés dont l'indice effectif est inférieur à l'indice des éléments environnant les chromophores, tels que le matériau de la chambre d'hybridation 20 et ou la solution d'hybridation 22, sont extraits du guide d'onde 14 et excitent les molécules cibles présentes dans la solution d'hybridation 22 et non accrochées à des molécules sondes. Il en résulte une diminution du rapport signal / bruit lorsque l'on effectue une mesure en temps réel de la luminescence émise par les chromophores.

Le dispositif selon l'invention propose d'utiliser des moyens de couplage sensiblement non directifs 19 et de dimensions peu critiques (0,1 à 10 mm par exemple) réalisant un couplage optique entre la source lumineuse et le guide de manière à générer des ondes guidées dans une pluralité de directions à l'intérieur du guide d'onde, à partir par exemple d'un faisceau de lumière d'excitation non collimaté. De tels moyens de couplage sont par exemple une structure diffusante et seront décrits plus en détails dans la suite de la description.

Avantageusement, ces moyens de couplage sont combinés à des moyens de filtrage modal, de manière à extraire du guide planaire multimode 14 les modes guidés dont l'indice effectif est inférieur ou égal à une valeur seuil prédéterminée.

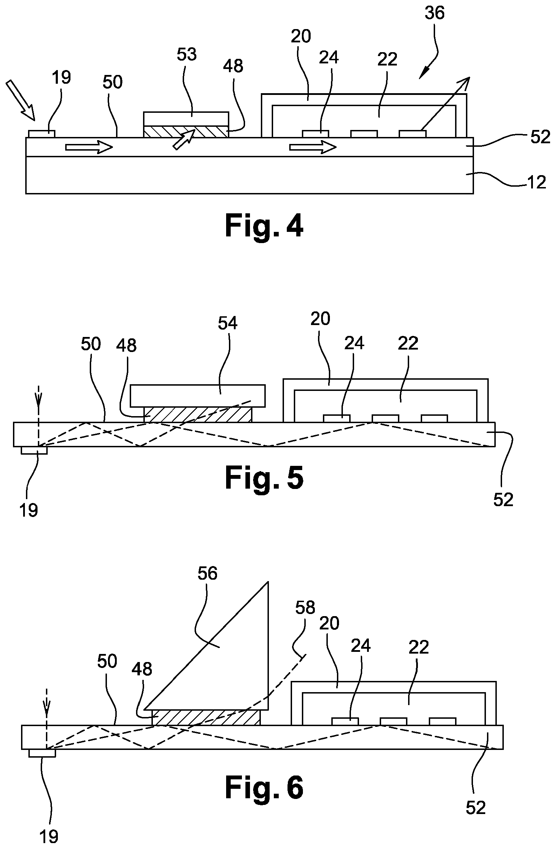

Ces moyens de filtrage peuvent soit être formés par le guide d'onde lui-même (figures 2 et 3) ou bien par être portés par celui-ci (figures 4 à 6).

On se réfère maintenant à la figure 2 qui représente une structure stratifiée comprenant trois couches superposées dont la couche supérieure 30 sert de guide d'onde planaire sans absorption et a un indice n₁. La deuxième couche 32 est intercalée entre la couche supérieure 30 et une couche inférieure d'absorption 34. La couche intermédiaire 32 d'adaptation d'indice a un indice n₂ sensiblement égal à la valeur seuil d'indice prédéterminée.

Dans cette réalisation, la couche supérieure 30 comprend à une extrémité les moyens de couplage 19 et à une autre extrémité la partie optofluidique 36. Les couches intermédiaire 32 et d'absorption 34 s'étendent sur toute la longueur de la couche supérieure guidante 30 de manière à réaliser un filtrage sur toute la longueur L séparant les moyens de couplage 19 sensiblement non directifs et la partie optofluidique 36.

L'indice n₃ de la couche absorbante 34 est choisi pour être supérieur à n₂, n₁ étant pour sa part suffisamment grand et l'épaisseur étant adéquate suivant les règles de l'optique guidée compte tenu des contrastes avec n₂ d'une part et avec l'indice n de la solution d'hybridation 22 d'autre part, pour supporter un mode au moins d'indice supérieur au seuil souhaité. L'épaisseur z₂ de la couche intermédiaire d'indice n₂ est suffisante pour que ce mode ne fuie pas sur la distance L: le facteur de décroissance exponentielle dans z₂, f = exp [2×π×(z₂/λ)×√(n_{eff}²-n²) > 1 doit être au moins trois fois plus grand que le rapport L/z₁ de L à l'épaisseur de la couche 30 d'indice n₁ pour que la couche intermédiaire joue son rôle sur la longueur L. Les modes d'indice n_{eff}<n₂ sont obligés de se propager dans la troisième couche absorbante, d'épaisseur z₃ et d'y parcourir une distance de l'ordre de L. Il suffit alors de doter cette troisième couche 34 d'un coefficient d'absorption α₃ supérieur à 2/L pour atténuer les modes indésirables d'indice n_{eff}<n₂.

A titre d'exemple, ces trois couches stratifiées peuvent être formées de polymère. Une séquence d'indice typique peut être n₁=1,55, n₂=1,42 et n₃=1,55. Les épaisseurs peuvent être z₁=5 à 50 µm pour la couche 30, z₂>3 µm pour la couche 32, et z₃ supérieur ou égal à z₁ pour la couche 34, par exemple de l'ordre de 500 µm pour une longueur L de 1 cm.

L'absorption peut être obtenue au moyen d'un colorant organique ou minéral dispersé dans la troisième couche 34. Dans un cas pratique, pour absorber la lumière à 532 nm utilisée pour l'excitation de chromophores tels que la Cyanine 3, on peut utiliser un dopage par des absorbants stable comme les sels de fer en Fe³⁺.

La figure 3 représente une seconde réalisation de moyens de couplage formés par le guide d'onde. Dans cette réalisation, les faces supérieure 38 et inférieure 40 du guide d'onde 42 sont planes et s'écartent l'une de l'autre depuis les moyens de couplage 19 jusqu'à la partie optofluidique 36, par exemple sous forme de biseau. Les faces supérieure 38 et inférieure 40 du guide d'onde 42 forment un angle α, au niveau de leur arête d'intersection 44 qui est dans le cas présent située hors du dispositif. Un tel guide 42 est appelé guide biseauté. Les rayons issus des moyens de couplage 19 qui sont réfléchis sur la face inférieure 40 se retrouvent de plus en plus inclinés vis-à-vis de la face supérieure 38, d'un angle 2α à chaque paire de réflexion. Ce filtrage est un filtrage « dynamique », dans lequel l'énergie des modes est reportée à des indices effectifs de plus en plus grand au fur et à mesure de la propagation des rayons lumineux. Pour comprendre le fonctionnement de ce filtrage, on peut utiliser les lois de l'optique géométrique. Il est ainsi possible de prévoir que les images successives 46 des moyens de couplage 19 sont tournées d'angles successifs 2α à chaque paire de réflexion et s'éloignent vers l'arête 44 en suivant un demi-cercle centré sur l'arête 44. Ceci implique une limite à l'angle d'incidence réalisable sur la partie optofluidique, en fonction des deux distances pertinentes du problème d'optique géométrique, à savoir L' correspondant à la distance de l'arête 44 aux moyens de couplage 19, et la distance L des moyens de couplage 19 à la partie optofluidique 36. La construction du triangle rectangle ABC passant par l'arête 44 et de rayon L' montre que l'angle minimal d'incidence θ d'un rayon sur la partie optofluidique est donné par sin(90° - θ) = cos θ = L'/(L+L'), car le triangle rectangle ABC a pour angle 90°-θ au sommet C. La détermination de cet angle impose ainsi une valeur minimale à l'indice effectif qui est n_{eff} = n × sin(θ). En pratique, il est souhaitable de viser des angles θ de l'ordre de 70° (n_{eff}=1,41 pour un indice du matériau du guide de l'ordre de n=1,5). Cela impose un rapport L/L'=1/sin(90°-arcsin(n_{eff}/n))-1 = 2. Notons que ce résultat est indépendant de l'angle α du biseau. Celui-ci peut être en pratique choisi entre 2° et 10°. L'extension des moyens de couplage 19, par exemple des diffuseurs, doit être prise en compte en cherchant simplement à assurer la condition souhaitée pour les rayons les plus défavorables parmi ceux issus de ces moyens, donc ceux de la source 19 les plus proches de la chambre d'hybridation 20.

Dans d'autres variantes (non représentées), les faces supérieure et inférieure peuvent s'écarter l'une de l'autre sans pour autant être planes, ce qui serait par exemple le cas avec des faces incurvées concaves. La face supérieure peut également être plane et la face inférieure peut être courbe, par exemple incurvée concave.

Dans les réalisations représentées aux figures 4 à 6, les moyens de filtrage sont portés par le guide d'onde et sont intercalés entre les moyens de couplage 19 et la zone 36 du guide d'onde 14 portant la chambre d'hybridation 20. Ces moyens comprennent avantageusement une couche d'adaptation d'indice 48 en contact avec la surface supérieure 50 du guide d'onde 52. Cette couche d'adaptation d'indice 48 est choisie de manière à ce que son indice de réfraction soit égal à la valeur seuil prédéterminée (figure 4).

Des moyens d'absorption ou de déviation 53 des modes guidés extraits du guide d'onde 52 sont avantageusement placés sur la couche d'adaptation d'indice 48.

Dans une réalisation pratique de l'invention, les moyens d'absorption comprennent par exemple un filtre 54 à large spectre d'absorption réalisant un filtrage en volume des ondes guidées. Ce type de filtre est très bien adapté puisqu'il ne réfléchit que très peu d'ondes guidées à son interface avec la couche d'adaptation d'indice 48 (figure 5). Les moyens de déviation comprennent par exemple un prisme 56 d'indice choisi pour réaliser une déviation des ondes guidées extraites comme représenté en 58 en figure 6.

Du fait de la présence d'une couche d'adaptation d'indice 48 entre les moyens de couplage et la zone 36 du guide d'onde portant la chambre d'hybridation 20, les modes guidés dont l'indice effectif est inférieur à l'indice de la couche d'adaptation d'indice 48 sont extraits du guide d'onde et sont réfractés à l'intérieur de cette couche. La présence de moyens d'absorption 54 ou de déviation 56 sur la couche 48 évite une réflexion des modes guidés extraits au niveau de l'interface supérieure de la couche d'adaptation d'indice 48, ce qui conduirait à réintroduire les modes guidés extraits à l'intérieur du guide planaire 52.

De manière à garantir un filtrage optimal des modes guidés d'indice effectif inférieur à la valeur seuil prédéterminée, la couche d'adaptation d'indice 48 et les moyens d'absorption ou les moyens de déviation doivent s'étendre entre la zone 19 de génération des ondes guidées et la zone 36 portant la chambre d'hybridation 20 sur une distance supérieure ou égale 2×e×tan θ, où e est l'épaisseur du guide d'onde et θ est l'angle de réflexion à l'intérieur du guide d'onde et par rapport à la normale au guide d'onde 52 du mode guidé à filtrer ayant le plus haut indice effectif. De cette manière, il est possible de garantir que tous les modes guidés dont l'indice effectif est inférieur à la valeur seuil prédéterminée subiront au moins une réfraction à l'interface entre le guide d'onde 52 et la couche d'adaptation d'indice 48.

En variante, les moyens de filtrage peuvent aussi s'étendre au moins en partie sous les plots 24 dans la chambre d'hybridation de manière à filtrer les photons éventuellement diffusés par les bords de la chambre vers des modes du guide d'indice incontrôlés qui pourraient ensuite fuir et exciter la solution.

Dans une réalisation de l'invention, la chambre d'hybridation 20 est réalisée en polydiméthylsiloxane (PDMS) ayant un indice de réfraction de n=1,42 et la solution d'hybridation 20 est à base d'eau ayant un indice de l'ordre de n=1,33. Dans un tel cas, le milieu d'adaptation d'indice 36 est choisi pour avoir un indice au moins égal au plus haut indice environnant les chromophores soit n=1,42.

En pratique, la valeur seuil d'indice sera choisie entre n=1,30 et 1,45 ce qui correspond aux valeurs d'indices couramment rencontrées pour les matériaux de la chambre d'hybridation 20 ainsi que pour la solution d'hybridation 20.

On va maintenant décrire plus en détail les moyens utilisés pour générer une pluralité d'ondes guidées à l'intérieur du guide d'onde planaire et ayant une partie évanescente destinée à exciter les éléments chromophores fixés sur les plots 24.

Dans un premier mode de réalisation, le dispositif comprend une structure diffusante formée dans le guide d'onde ou sur celui-ci et destinée à être éclairée par la lumière d'excitation.

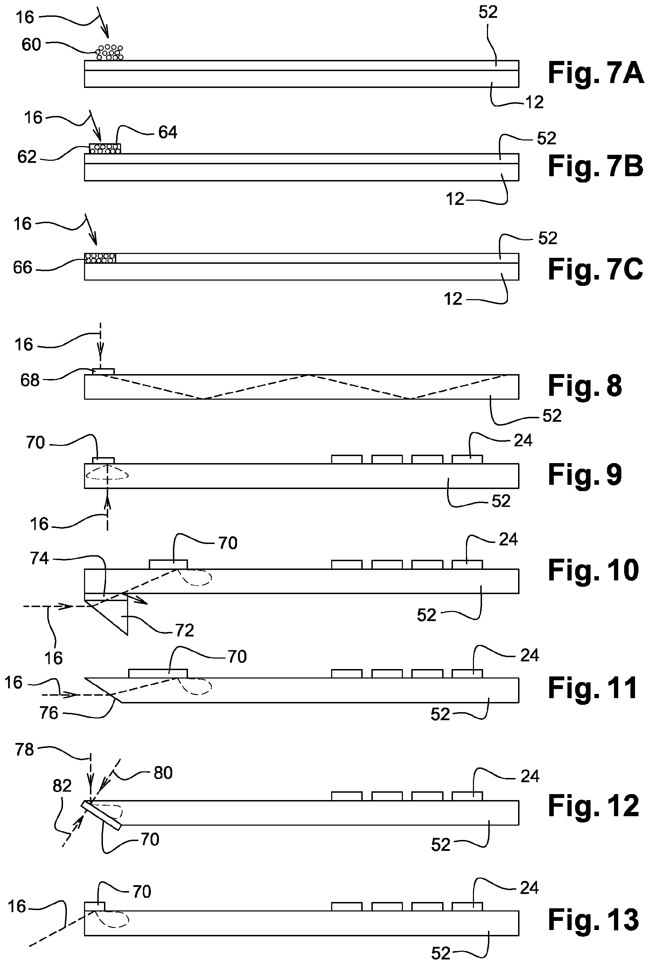

Cette structure diffusante (figures 7 et 8) présente une répartition spatiale désordonnée d'indice de manière à diffuser la lumière d'excitation à l'intérieur du guide dans une pluralité de directions. Une telle structure facilite la conversion de la lumière d'excitation en lumière guidée et ceci avec une efficacité qui dépend peu des conditions d'excitation, notamment de l'angle d'incidence. Ainsi, avec une telle structure diffusante, la tolérance angulaire est assez large et de l'ordre de 10 degrés, ce qui ne nécessite pas de montage mécanique et optique très précis alors qu'elle est de l'ordre de 0,1 degré quand on utilise un réseau 18.

Cette structure diffusante peut se trouver sur une face ou sur l'autre du guide d'onde 14, qui est transparent à la lumière d'excitation 16.

Dans une première réalisation de la structure diffusante 60, celle-ci est formée par une couche déposée sur le guide d'onde et présente une structure interne désordonnée. La couche peut consister en un dépôt de particules métalliques ou colloïdales 60 (figure 7A) ou bien en un dépôt de « Téflon » (polytétrafluoroéthylène).

On peut également déposer une couche 62 formée d'une matrice contenant des particules diffusantes 64 (Figure 7B). La matrice peut consister en une résine de même type que celle utilisée pour les peintures ou les vernis, telle par exemple que des résines acryliques ou glycérophtaliques ou bien des polymères fluorés.

Pour garantir une bonne conversion par diffusion de la lumière d'excitation 16 en ondes guidées pour des épaisseurs faibles de la couche de diffusion, c'est-à-dire de l'ordre de 15% à 60%, il est souhaitable que l'indice de réfraction de la matrice soit inférieur d'au moins Δn=0,5 à celui des particules diffusantes 64.

Une structure diffusante 66 peut aussi être obtenue en réalisant des micro-cavités, par exemple des micro-cavités sphéroïdales, à l'intérieur du guide d'onde 14 ou en modifiant localement le matériau du guide d'onde 14 en changeant son degré d'oxydation ou en changeant sa phase, d'amorphe à cristalline ou de cristalline à amorphe au moyen par exemple d'impulsions laser de l'ordre 0,1 ps à 1 µs d'une énergie typique de 1 nanoJoule à 100 microJoules. Ce type de structure présente ainsi des discontinuités d'indices aptes à réaliser une diffusion de la lumière d'excitation dans une pluralité de directions. Des méthodes de nucléation de pores en phase sol-gel existent aussi et sont souvent utilisées pour réaliser des couches à basse constante diélectrique en microélectronique.

Dans une autre réalisation d'une structure diffusante, celle-ci consiste en une couche 68 d'un matériau fluorescent et diffusant comme les phosphores des diodes électroluminescentes blanches, et générant en réponse à une excitation lumineuse des ondes guidées ayant une partie évanescente et se propageant dans une pluralité de directions.

Le matériau fluorescent peut consister en une couche ordonnée ou désordonnée de fluorophores tels que notamment des boîtes quantiques, des fluorophores organiques ou des fluorophores à base de terre rare.

La couche de matériau fluorescent peut également consister en une couche comprenant un liant tel qu'une poudre minérale ou organique ayant une granulométrie comprise entre 0,1 et 50 µm ou une matrice polymérique appartenant aux familles utilisées dans les maquillages et les vernis et peintures, telles que des résines acryliques, glycérophtaliques, etc. et des éléments fluorophores tels que ceux décrits au paragraphe précédent.

La couche de matériau fluorescent peut également comprendre des éléments diffusants de type particule de haut indice (oxydes de Titane par exemple ou carbonates de calcium ou sulfate de Baryum) et des fluorophores comme ceux mentionnés ci-dessus.

Dans ces réalisations de structure diffusante, le processus de création d'ondes guidées possédant une partie évanescente peut être schématisé comme l'émission d'un ensemble de dipôles optiques à la surface du guide d'onde ou bien à l'intérieur de celui-ci. Dans le cas d'une structure diffusante représentée aux figures 7A, 7B et 7C, ces dipôles oscillent à la même fréquence que celle de la lumière d'excitation 16 et dans le cas d'une structure diffusant par fluorescence, les dipôles oscillent après conversion à la fréquence de fluorescence des fluorophores. Dans ce dernier cas, la fréquence de fluorescence est choisie de manière à permettre une excitation des chromophores portés par les plots 24.

L'excitation de la structure diffusante par la lumière 16 peut s'effectuer directement ou indirectement comme cela est représenté sur les figures 8 à 13.

La figure 8 représente une excitation de la structure diffusante par transmission de la lumière d'excitation 16 à travers la structure diffusante 68. Ceci n'est possible que lorsque la structure diffusante 68 est faiblement opaque de manière à éviter une absorption de la lumière d'excitation 16 par la structure diffusante 68.

La figure 9 représente une excitation de la structure diffusante par transmission de la lumière d'excitation 16 à travers l'épaisseur du guide d'onde.

Dans une autre configuration représentée en figure 10, un prisme 72 peut être couplé optiquement au guide d'onde 52 par l'intermédiaire d'une couche d'adaptation d'indice 74. Il est également possible d'intégrer par moulage le prisme 72 au guide d'onde 52. La lumière d'excitation 16 est ainsi déviée par le prisme à l'intérieur du guide d'onde et vient exciter la structure diffusante 70.

Dans une réalisation similaire représentée en figure 11, un chanfrein 76 est réalisé à l'extrémité du guide d'onde portant la structure diffusante 70. Pour ces deux réalisations représentées en figures 10 et 11, l'excitation lumineuse 16 est orientée parallèlement au plan du guide d'onde en direction de la surface inclinée du prisme 72 ou du chanfrein 76. La lumière 16 est ensuite déviée vers la structure diffusante 70 pour générer des ondes guidées ayant une partie évanescente.

Dans la réalisation de la figure 12, la structure diffusante 70 est portée par la surface chanfreinée 62 du guide d'onde et la lumière d'excitation peut être orientée de manière quelconque par rapport au plan du guide d'onde portant les plots 24. La lumière d'excitation 78 peut ainsi être orientée perpendiculairement à la lame ou bien être inclinée 80 par rapport à la verticale à la lame. Elle traverse une partie du guide d'onde pour venir ensuite éclairer la structure diffusante. La lumière d'excitation 82 peut aussi exciter le guide par diffusion/transmission à travers le diffuseur 70.

Dans une dernière réalisation représentée en figure 13, l'excitation lumineuse 16 est transmise à la structure diffusante 70 à travers la tranche brute ou polie du guide d'onde 14.

## Revendications

1. Dispositif de type biopuce, comprenant un substrat (12) constitué d'au moins une lame (52) d'un matériau formant un guide d'onde multimode et portant des éléments chromophores aptes à émettre une fluorescence en réponse à une excitation par des ondes guidées ayant une partie évanescente, **caractérisé en ce qu'**il comprend des moyens de couplage (19) d'une lumière extérieure d'excitation des chromophores avec le guide d'onde sous forme d'ondes guidées, ces moyens de couplage (19) étant sensiblement non directifs de façon à diffuser la lumière extérieure d'excitation selon une pluralité de directions à l'intérieur du guide d'onde lorsque ladite lumière extérieure d'excitation des chromophores provient d'une pluralité de directions.

2. Dispositif selon la revendication 1, comprenant des moyens de filtrage modal pour la suppression dans le guide d'onde des modes guidés d'indice effectif inférieur ou égal à une valeur seuil prédéterminée.

3. Dispositif selon la revendication 2, dans lequel les moyens de filtrage comprennent une couche d'adaptation d'indice (32, 48) en contact avec le guide d'onde (30, 52) et formée d'un milieu d'indice sensiblement égal à la valeur seuil prédéterminée de manière à filtrer par extraction les modes guidés d'indice effectif inférieur à la valeur seuil.

4. Dispositif selon la revendication 3, dans lequel la couche d'adaptation d'indice est intercalée entre la lame guide d'onde (30) et une couche inférieure d'absorption (34), la couche d'adaptation d'indice (32) et la couche d'absorption (34) s'étendant sensiblement sur la longueur du guide d'onde (30), la couche d'absorption (34) ayant un indice au moins égal à celui de la couche intermédiaire d'adaptation d'indice et présentant une absorption importante à l'échelle du trajet optique entre les moyens de couplage et une zone du guide d'onde portant les éléments chromophores, aux longueurs d'onde d'excitation des chromophores.

5. Dispositif selon la revendication 3, dans lequel les moyens de filtrage sont portés par le guide d'onde (52) et sont localisés entre une zone (19) du guide d'onde (52) dans laquelle sont générés les ondes guidées et une zone (36) du guide d'onde (52) portant les éléments chromophores.

6. Dispositif selon la revendication 5, dans lequel des moyens d'absorption (54) des modes guidés extraits du guide d'onde sont placés sur la couche d'adaptation d'indice (48).

7. Dispositif selon la revendication 5, dans lequel des moyens de déviation (56) des modes guidés extraits du guide d'onde sont placés sur une couche d'adaptation d'indice (48).

8. Dispositif selon la revendication 6 ou 7, dans lequel la couche d'adaptation d'indice (48) ainsi que les moyens d'absorption ou les moyens de déviation s'étendent sur une distance supérieure à 2 x e x tan θ, où e est l'épaisseur du guide d'onde et θ est l'angle de réflexion à l'intérieur du guide d'onde (14) et par rapport à la normale au guide d'onde (14) du mode guidé à filtrer ayant le plus haut indice effectif.

9. Dispositif selon l'une des revendications 2 à 8, dans lequel les moyens de filtrage modal s'étendent en amont de la zone (36) portant les éléments chromophores et en partie dans cette zone (36).

10. Dispositif selon la revendication 2, dans lequel les moyens de filtrage sont formés par la lame portant les éléments chromophores et dont les faces supérieure (38) et inférieure (40) s'écartent l'une de l'autre depuis la zone des moyens de couplage (19) jusqu'en aval de la zone (34) portant les éléments chromophores.

11. Dispositif selon la revendication 10, dans lequel les faces supérieure et inférieure sont planes et en ce que les moyens de couplage (19) non directifs sont placés au plus au tiers de la distance séparant une arête formée à l'intersection des faces supérieure (38) et inférieure (40) et la partie du guide d'onde portant les éléments chromophores (36).

12. Dispositif selon l'une des revendications 2 à 11, dans lequel la valeur d'indice seuil est supérieure ou égale au plus haut indice de réfraction d'éléments constituant l'environnement des chromophores, tels par exemple qu'une chambre d'hybridation (20) placée sur le substrat (12) et un fluide d'hybridation (22) contenu dans la chambre (20).

13. Dispositif selon l'une des revendications 2 à 12, dans lequel les moyens de couplage comprennent une structure diffusante formée dans ou sur le guide d'onde (14).

14. Dispositif selon la revendication 13, dans lequel la structure diffusante est une structure à répartition spatiale désordonnée d'indice.

15. Dispositif selon la revendication 13 ou 14, dans lequel la structure diffusante est formée par un dépoli ou par une couche déposée sur une face du guide d'onde, par exemple de « téflon » ou de particules métalliques ou colloïdales.

16. Dispositif selon l'une des revendications 13 à 15, dans lequel la structure diffusante (64) comprend des particules diffusantes (62) dans une matrice d'une résine telle par exemple qu'une résine acrylique ou glycérophtalique ou d'un polymère, par exemple fluoré, la matrice ayant un indice de réfraction inférieur d'au moins 0,5 à celui des particules diffusantes.

17. Dispositif selon la revendication 13 ou 14, dans lequel la structure diffusante (66) est située à l'intérieur du guide d'onde et est réalisée sous la forme de micro-cavités de dimensions de l'ordre de 0,1 à 40 µm ou de modifications locales du guide d'onde telles que par exemple un changement de stoechiométrie du milieu ou bien un passage local d'une phase cristalline à une phase amorphe ou inversement, changement affectant son indice ou son tenseur diélectrique.

18. Dispositif selon la revendication 13, dans lequel la structure diffusante (68) déposée sur une face du guide d'onde comprend une couche de matériau fluorophore générant en réponse à une excitation lumineuse une lumière de fluorescence se propageant dans le guide d'onde sous forme d'ondes ayant une partie évanescente.

19. Dispositif selon la revendication 18, dans lequel le matériau fluorophore comprend des boîtes quantiques, des fluorophores organiques ou à base de terre rare ou d'ions luminescents.

## Patentansprüche

1. Biochip-Vorrichtung mit einem Substrat (12), das aus einer dünnen Schicht (52) eines einen Multimode-Wellenleiter bildenden Materials besteht und chromophore Elemente trägt, die geeignet sind, als Antwort auf eine Anregung durch geführte Wellen mit einem abklingenden Teil eine Fluoreszenz auszustrahlen, **dadurch gekennzeichnet, daß** sie Mittel (19) zum Koppeln eines äußeren Anregungslichts der Chromophore mit dem Wellenleiter in Form von geführten Wellen aufweist, wobei die Kopplungsmittel (19) im Wesentlichen nicht richtungsgebend sind, um das äußere Anregungslicht im Inneren des Wellenleiters in eine Vielzahl von Richtungen auszusenden, wenn das äußere Anregungslicht der Chromophore aus einer Vielzahl von Richtungen kommt.

2. Vorrichtung gemäß Anspruch 1 mit modalen Filtermitteln, um im Wellenleiter geführte Moden mit einem effektiven Index von weniger als oder gleich einem vorbestimmten Schwellenwert zu unterdrücken.

3. Vorrichtung gemäß Anspruch 1, bei der die Filtermittel eine mit dem Wellenleiter (30, 52) in Kontakt stehende und aus einem Umfeld mit einem dem vorbestimmten Schwellenwert im Wesentlichen gleichen Index gebildete Indexanpassungsschicht (32, 48) aufweisen, µm die Moden mit einem effektiven Index von weniger als dem vorbestimmten Schwellenwert durch Extraktion herauszufiltern.

4. Vorrichtung gemäß Anspruch 3, bei der die Indexanpassungsschicht zwischen der Wellenleiterschicht (30) und einer unteren Absorptionsschicht (34) angeordnet ist, wobei sich die Indexanpassungsschicht (32) und die Absorptionsschicht (34) im Wesentlichen über die Länge des Wellenleiters erstrecken, wobei die Absorptionsschicht (34) einen Index von wenigstens gleich dem der Indexanpassungszwischenschicht hat und eine für die Anregungswellenlängen der Chromophore auf die optische Wegstrecke zwischen den Kopplungsmitteln und einer die chromophoren Elemente tragenden Zone des Wellenleiters bezogene starke Absorption aufweist,

5. Vorrichtung gemäß Anspruch 3, bei der die Filtermittel vom Wellenleiter (52) getragen werden und zwischen einer Zone (19) des Wellenleiters (52), in der die geführten Wellen erzeugt werden, und einer die chromophoren Elemente tragenden Zone (36) angeordnet sind.

6. Vorrichtung gemäß Anspruch 5, bei der die Mittel (54) zum Absorbieren der aus dem Wellenleiter extrahierten geführten Moden auf der Indexanpassungsschicht (48) platziert sind.

7. Vorrichtung gemäß Anspruch 5, bei der die Mittel (56) zum Ableiten der aus dem Wellenleiter extrahierten geführten Moden auf einer Indexanpassungsschicht (48) platziert sind.

8. Vorrichtung gemäß Anspruch 6 oder 7, bei der sich die Indexanpassungsschicht (48) sowie die Absorptionsmittel und die Ableitungsmittel über eine Entfernung von mehr als 2 x e x tan θ erstrecken, wobei e die Dicke des Wellenleiters ist und θ der Reflexionswinkel im Inneren des Wellenleiters (14) und in Bezug auf die zum Wellenleiter (14) Senkrechte des zu filternden geführten Modes ist, der den höchsten effektiven Index aufweist.

9. Vorrichtung gemäß einem der Ansprüche 2 bis 8, bei der sich die modalen Filtermittel vor der die chromophoren Elemente tagenden Zone (36) und zum Teil in dieser Zone (36) erstrecken.

10. Vorrichtung gemäß Anspruch 2, bei der die Filtermittel von der die chromophoren Elemente tragenden dünnen Schicht gebildet sind und deren Oberseite (38) und Unterseite (40) sich von der Zone der Kopplungsmittel (19) bis vor die die chromophoren Elemente tragende Zone (36) voneinander entfernen.

11. Vorrichtung gemäß Anspruch 10, bei der die Ober- und die Unterseite eben sind und bei der die nicht richtungsgebenden Kopplungsmittel (19) in höchstens einem Drittel des Abstands, der einen am Schnitt der Oberseite (38) mit der Unterseite (40) gebildeten Grat von dem die chromophoren Elemente (36) tragenden Teil des Wellenleiters trennt, platziert sind.

12. Vorrichtung gemäß einem der Ansprüche 2 bis 11, bei der der Indexschwellenwert größer als oder gleich dem höchsten Brechungsindex von Elementen ist, die das Umfeld der Chromophore bilden, wie zum Beispiel eine auf dem Substrat (12) angeordnete Hybridisierungskammer (20) und eine in der Kammer (20) enthaltene Hybridisierungsflüssigkeit (22).

13. Vorrichtung gemäß einem der Ansprüche 2 bis 12, bei der die Kopplungsmittel eine in oder auf dem Wellenleiter (14) gebildete streuende Struktur aufweisen.

14. Vorrichtung gemäß Anspruch 13, bei der die streuende Struktur eine Struktur mit räumlich ungeordneter Indexverteilung ist.

15. Vorrichtung gemäß Anspruch 13 oder 14, bei der die streuende Struktur durch eine Mattierung oder durch eine auf einer Seite des Wellenleiters aufgebrachte Schicht, zum Beispiel aus "Teflon" oder aus metallenen oder kolloidalen Teilchen, gebildet ist.

16. Vorrichtung gemäß einem der Ansprüche 13 bis 15, bei der die streuende Struktur (64) streuende Teilchen (62) in einer Matrix aus einem Harz wie etwa einem Akrylharz oder einem Glyptalharz oder einem zum Beispiel fluorierten Polymer aufweist, wobei die Matrix einen Brechungsindex von mindestens 0,5 weniger als jenem der streuenden Teilchen aufweist.

17. Vorrichtung gemäß Anspruch 13 oder 14, bei der die streuende Struktur (66) im Inneren des Wellenleiters angeordnet ist und in Form von Mikrohohlräumen mit Abmessungen in der Größenordnung von 0,1 bis 40 µm oder von lokalen Änderungen des Wellenleiters wie zum Beispiel einer Änderung der Stöchiometrie des Umfelds oder eines lokalen Übergangs von einer kristallinen Phase in eine amorphe Phase oder umgekehrt ausgebildet ist, wobei die Änderung deren Index oder deren dielektrische Festigkeit ändert.

18. Vorrichtung gemäß Anspruch 13, bei der die auf einer Seite des Wellenleiters aufgebrachte streuende Struktur (68) eine Schicht aus fluorophorem Material aufweist, das als Antwort auf eine Anregung durch Licht ein fluoreszierendes Licht erzeugt, das sich im Wellenleiter in Form von Wellen mit einem schwächer werdenden Anteil ausbreitet.

19. Vorrichtung gemäß Anspruch 18, bei der das fluorophore Material Quantenpunkte, organische Fluorophore oder Fluorophore auf der Basis von Seltener Erde oder leuchtenden Ionen aufweist.

## Claims

1. A biochip device comprising a substrate (12) constituted by at least one plate (52) of material forming a multimode waveguide and carrying chromophore elements suitable for emitting fluorescence in response to excitation by guided waves having an evanescent portion, **characterized in that** it includes coupling means (19) for coupling an external excitation light of the chromophores with the waveguide in the form of guided waves, these coupling means being substantially non-directional so as to scatter the external excitation light into a plurality of directions inside the waveguide when said external excitation light of the chromophores originates from a plurality of directions.

2. A device according to claim 1, comprising mode filter means for eliminating from the waveguide guided modes having an effective index less than or equal to a predetermined threshold value.

3. A device according to claim 2, wherein the filter means comprise an index-matching layer (32, 48) in contact with the waveguide (30, 52) and formed by a medium of index substantially equal to the predetermined threshold value so as to filter the guided modes of effective index less than the threshold value by extracting them.

4. A device according to claim 3, wherein the index-matching layer is interposed between the waveguide plate (30) and an absorption bottom layer (34), the index-matching layer (32) and the absorption layer (34) extending substantially along the length of the waveguide (30), the absorption layer (34) having an index not less than that of the index-matching intermediate layer and presenting absorption at the excitation wavelengths of the chromophores that is considerable at the scale of the light path between the coupling means and a zone of the waveguide carrying the chromophore elements.

5. A device according to claim 3, wherein the filter means are carried by the waveguide (52) and are located between a zone (19) of the waveguide (52) in which the guided waves are generated and a zone (36) of the waveguide (52) carrying the chromophore elements.

6. A device according to claim 5, wherein absorption means (54) for absorbing guided modes extracted from the waveguide are placed on the index-matching layer (48).

7. A device according to claim 5, wherein deflector means (56) for deflecting guided modes extracted from the waveguide are placed on the index-matching layer (48) .

8. A device according to claim 6 or 7, wherein the index-matching layer (48) and the absorption means or the deflector means extend over a distance that is longer than 2×e×tan θ, where e is the thickness of the waveguide and θ is the reflection angle inside the waveguide (14) and relative to the normal of the waveguide (14) for the guided mode for filtering having the greatest effective index.

9. A device according to any one of claims 2 to 8, wherein the mode filter means extend upstream from the zone (36) carrying the chromophore elements and in part within said zone (36).

10. A device according to claim 2, wherein the filter means are formed by the plate carrying the chromophore elements and having top (38) and bottom (40) faces that diverge from each other going from the zone of the coupling means (19) to downstream from the zone (34) carrying the chromophore elements.

11. A device according to claim 10, wherein the top and bottom faces are plane and wherein the non-directional coupling means (19) are placed at one-third of the distance between an edge formed by the intersection of the top (38) and bottom (40) faces and the portion of the waveguide carrying the chromophore elements (36).

12. A device according to any one of claims 2 to 11, wherein the threshold index value is greater than or equal to the greatest refractive index of the elements constituting the environment of the chromophores, such as for example the elements constituting a hybridizing chamber (20) placed on the substrate (12) and a hybridizing fluid (22) contained in the chamber (20).

13. A device according to any one of claims 2 to 12, wherein the coupling means comprise a diffusing structure formed in or on the waveguide (14).

14. A device according to claim 13, wherein the diffusing structure is a structure having a disordered spatial distribution of index.

15. A device according to claim 13 or 14, wherein the diffusing structure is formed by frosting or by a layer deposited on a face of the waveguide, e.g. a layer of "Teflon" or of metallic or colloidal particles.

16. A device according to any one of claims 13 to 15, wherein the diffusing structure (64) comprises diffusing particles (62) in a resin matrix, such as for example an acrylic resin or a glycerophthalic resin, or in a polymer matrix, e.g. a fluoropolymer matrix, the matrix having a refractive index that is less than that of the diffusing particles by at least 0.5.

17. A device according to claim 13 or 14, wherein the diffusing structure (66) is situated inside the waveguide and is made in the form of microcavities having dimensions of the order of 0.1 µm to 40 µm or in the form of local modifications of the waveguide such as, for example, a change in the stoichiometry of the medium or a local change from a crystalline phase to an amorphous phase or vice versa, which change affects the index of the material or its dielectric tensor.

18. A device according to claim 13, wherein the diffusing structure (68) deposited on a face of the waveguide comprises a layer of fluorophore material that responds to light excitation by generating fluorescent light that propagates in the waveguide in the form of waves having an evanescent portion.

19. A device according to claim 18, wherein the fluorophore material comprises quantum dots, organic fluorophores, or fluorophores based on rare earth or on luminescent ions.
